**Europäisches Patentamt**

**European Patent Office**

**Office européen des brevets**

(19)

(11) Veröffentlichungsnummer: **0 110 940**

**B1**

(12)

# EUROPÄISCHE PATENTSCHRIFT

(45) Veröffentlichungstag der Patentschrift:
18.03.87

(21) Anmeldenummer: **83901805.8**

(22) Anmeldetag: **01.06.83**

(86) Internationale Anmeldenummer:
**PCT/DE 83/00092**

(87) Internationale Veröffentlichungsnummer:
**WO 83/04319 (08.12.83 Gazette 83/28)**

(51) Int. Cl.⁴: **G 03 B 27/10,** G 03 B 27/24, G 03 F 9/00

(54) **VORRICHTUNG ZUM EINBRINGEN, AUSBRINGEN UND TRENNEN VON KOPIER- UND BELICHTUNGSSCHICHTEN.**

(30) Priorität: **02.06.82  DE 3220637**

(43) Veröffentlichungstag der Anmeldung:
**20.06.84 Patentblatt 84/25**

(45) Bekanntmachung des Hinweises auf die Patenterteilung:
**18.03.87 Patentblatt 87/12**

(84) Benannte Vertragsstaaten:
**DE FR GB**

(56) Entgegenhaltungen:
**EP-A-0 042 136**
**DE-A-2 437 687**
**DE-A-2 944 312**
**FR-A-1 540 024**
**FR-A-1 543 146**
**GB-A-1 155 389**
**US-A-3 635 559**
**US-A-4 023 789**

(73) Patentinhaber: **Haus, Hans, Hahlgartenweg 7, D-5250 Limburg/Lahn (DE)**

(72) Erfinder: **Haus, Hans, Hahlgartenweg 7, D-5250 Limburg/Lahn (DE)**

(74) Vertreter: **Hemmerich, Friedrich Werner, Patentanwälte HEMMERICH- MÜLLER- GROSSE- POLLMEIER Eduard- Schloemann- Strasse 47, D-4000 Düsseldorf 1 (DE)**

## Beschreibung

Die Erfindung bezieht sich auf eine Vorrichtung zum Einbringen, Ausbringen und Trennen von Kopier- und Belichtungsgutschichten in einer Einrichtung zum kontinuierlichen Belichten dieses Gutes, bei der im Reibschluß mit der Rückseite einer der Schichten stehende endlose Riemenförderer diese durch einen Belichtungsraum mit einer lichtdurchlässigen Scheibe transportieren, deren in Bewegungsrichtung des Gutes gemessene Länge kleiner ist als deren Breite, wobei in Bewegungsrichtung vor und hinter der lichtdurchlässigen Scheibe Treibwalzenpaare angeordnet sind, die das Gut von oben und unten beaufschlagen und Ein- und Austrittsspalte bilden, die in der Ebene der dem Gut zugewandten Seite der lichtdurchlässigen Scheibe liegen, und daß das Kopier- und Belichtungsgut von Eintritt in den Eintrittsspalt mit Passtiften in seiner Lage zueinander fixiert wird.

Bei einer Vorrichtung dieser Art (DE-A- 2 944 312) wurde die Kopier- und Belichtungsgutschicht in Belichtungsumschläge aus flexiblem, lichtdurchlässigem Werkstoff ·eingebracht und mittels Passerstiften in ihrer gegenseitigen Lage zueinander fixiert. Die Passerstifte bestanden aus Passerstiftknöpfen, die aus der Innenfläche der einen Umschlagseite der Belichtungsumschläge herausragten, und die andere Umschlagseite wies entsprechende Ausnehmungen zur Aufnahme dieser Stifte auf. Die freie Höhe der Stifte war kleiner bemessen als die der Ausnehmungen. Das Kopier- und Belichtungsgut wurde ebenfalls mit Ausnehmungen versehen, die auf die Stifte aufgeschoben und damit in ihrer Lage fixiert weren. Die Belichtungsumschläge mit dem darin lagefixierten Kopier- und Belichtungsgut konnten dann die Vorrichtung durchlaufen. Anschließend mußte der Belichtungsumschlag geöffnet, das Kopier- und Belichtungsgut herausgenommen und von einandergetrennt werden.

Die beschriebene Arbeitsweise der Vorrichtung mit Belichtungsumschlagen bringt nicht nur den Nachteil mit sich, daß die auf dem Kopiergut aufliegende Umschlagseite aus lichtdurchlässigem Werkstoff eine Streuwirkung auf die von oben einfallenden Lichtstrahlen der Lichtquelle ausübt, die besonders beim Arbeiten mit gerichtetem Licht die Exaktheit der Kopie beeinträchtigen kann; sie ist auch wegen der Notwendigkeit des jedesmaligen Einlegens des Kopier- und Belichtungsgutes in den Belichtungsumschlag und des Wiederherausnehmens nach erfolgter Belichtung umständlich und erlaubt es vor allen Dingen nicht, Hilfsmittel zur kontinuierlichen Weiterverarbeitung des Belichtungsgutes und Sammeln des Kopiergutes unmittelbar nach dem Belichtungsvorgang einzusetzen.

Der Erfindung liegt die Aufgabe zugrunde, den anfangs erwähnten Nachteil zu vermeiden und die Möglichkeit eines automatischen, kontinuierlichen Betriebe der gattungsgemäßen Vorrichtung zu schaffen.

Diese Aufgabe wird dadurch gelöst, daß das Kopier- und Belichtungsgut auf einem, vor dem Eintrittspalt in Richtung auf diesen geradlinig hin- und herbewegbaren die Passerstifte tragenden Tragschlitten liegt, und die Passerstifte mittels einer Hubvorrichtung in Lochungen des Kopier- und Belichtungsgutes ein- und herausbringbar sind. Die quer zur Bewegungsrichtung des Kopier- und Belichtungsgutes verlaufende Vorderkante des Kopiergutes wird dabei zweckmäßig über die Vorderkante des Belichtungsgutes überstehend auf dem Tragschlitten angeordnet. Wie die Erfindung weiter vorsieht, kann in Bewegungsrichtung des Kopier- und Belichtungsgutes hinter dem Austrittsspalt eine Stützleiste angeordnet sein, die die Unterseite des überstehenden Kopiergutes unterfaßt und von einer Schaltvorrichtung gesteuert wird. Der Tragschlitten kann eine Auflagefläche für das Kopier- und Belichtungsgut aufweisen, auf der in Reihe, quer zur Bewegungsrichtung des Tragschlittens die fest mit der Auflagefläche verbundenen Passerstifte und dicht vor der Reihe der Passerstifte ein, auf die Auflagefläche aufleg- sowie anheb- und absenkbares Hublineal angeordnet sind. Der Tragschlitten kann eine Auflagefläche für das Kopier- und Belichtungsgut aufweisen, auf der in Reihe, quer zur Bewegungsrichtung des Tragschlittens Passerstifte angeordnet sind, die mittels an den Tragschlitten angeordneter Hubeinrichtungen absenk- und anhebbar sind. Diese Passerstifte können auch gemeinsam auf einer besonderen auswechselbaren Tragleiste angeordnet sein. Weiter wird zweckmäßig in Bewegungsrichtung des Tragschlittens ein Tastschalter angeordnet, der die Bewegung des Hublineals bzw. der Passerstifte steuert. Der Tragschlitten kann weiter durch eine durch Feder, Gewicht oder Motor angetriebene Rückziehvorrichtung in seine Ausgangsstellung zurückgefahren werden und das Hublineal an dem einen Arm einer, auf dem Tragschlitten gelagerten Doppelhebelanordnung befestigt sein, deren anderer Arm an einen Hubmotor angelenkt ist.

Die Vorrichtung erlaubt es, das Belichtungsgut z.B. eine Druckplatte und das Kopiergut mit Hilfe von vorab eingebrachten Lochungen durch die vor dem Eintrittsspalt der Vorrichtung angeordneten Passerstifte lagefixiert in Richtung auf den Eintrittsspalt der Treibwalzen zu bewegen. Die Treibwalzen erfassen dabei zunächt die überstehende Vorderkante des Kopiergutes (Original); dieses wird dabei gestrafft, und anschließend wird das Belichtungsgut (Druckplatte) von den Treibwalzen erfaßt und die so gebildete Schicht plan in die Vorrichtung hineinbewegt. Nach etwa 5-10 cm Einzug können die Passerstifte aus der gelochten Fassung von Kopiergut und Belichtungsgut herausbewegt werden und die Schicht bewegt sich nun unverrückbar gegeneinander ohne die Passerstifte unter der lichtdurchlässigen Scheibe hinweg und aus dem Austrittsspalt heraus. Hier hinter dem Austrittsspalt läuft die Vorderkante des Kopiergutes auf die Stützleiste auf, wird von dieser angehoben und dem Treibwalzenpaar zugeführt, daß das Kopiergut in die Sammelmulde einbringt, während das Belichtungsgut in der Ebene der dem Gut zugewandten Seite der lichtdurchlässigen Scheibe mit Hilfe der Transportvorrichtung der Entwicklungseinrichtung zugeführt wird.

Die Erfindung wird anhand des in der Zeichnung dargestellten Ausführungsbeispiels näher erläutert. In der Zeichnung zeigen

Fig. 1 die Gesamtvorrichtung von der Seite gesehen in schematischer Darstellung

Fig. 2 und 3 eine Einzelheit ebenfalls in schematischer Darstellung in zwei Arbeitsstellungen.

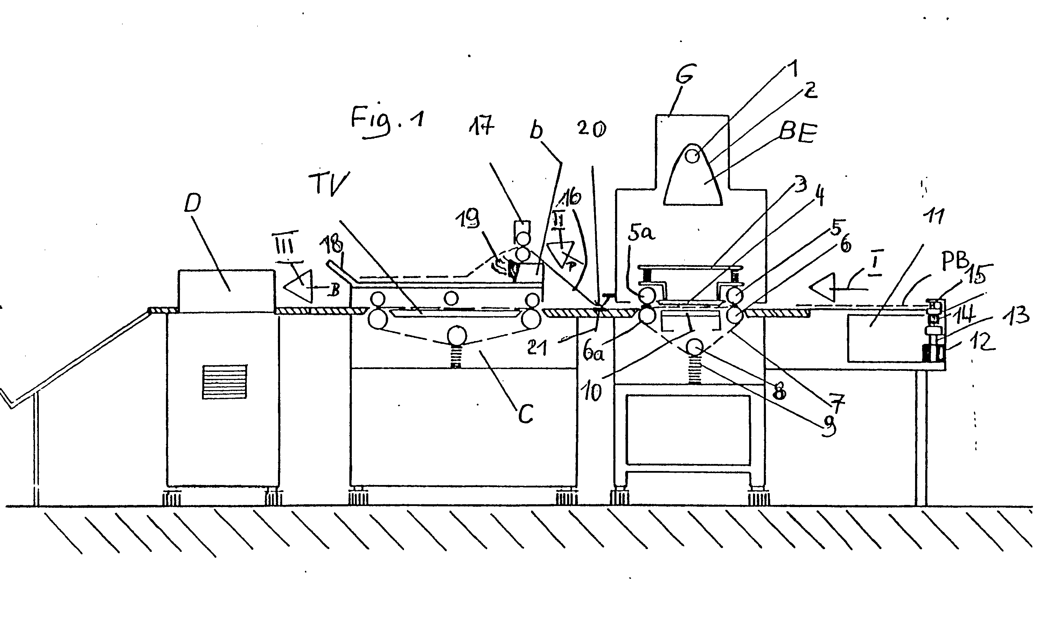

Wie aus Fig. 1 zu ersehen, besteht die eigentliche Belichtungsvorrichtung aus dem Gehäuse G mit der Belichtungseinrichtung BE, die einen Brenner 1 mit Reflektor 2 aufweist. Unterhalb der Belichtungseinrichtung befindet sich die lichtdurchlässige Scheibe 4, die mit einer druckeinstellbaren Federung 3 gegen eine ortsfeste Auflageplatte 10 gedrückt wird. In Bewegungsrichtung der in unterbrochenen Linien angedeuteten Kopier- und Belichtungsgutschicht PB, die mit dem Pfeil 1 angedeutet ist, sind vor der lichtdurchlässigen Platte 4 das Treibwalzenpaar 5, 6, das den Eintrittsspalt bildet, und hinter dieser das Treibwalzenpaar 5a, 6a, das den Austrittsspalt bildet, angeordnet. Die Walzen 5 und 5a sind Druckwalzen während die Walzen 6, 6a Antriebswalzen darstellen. Um die Antriebswalzen 6, 6a sind Transportbänder 7 geführt, die von einer Spannwalze 8 mit Spannfeder 9 unter einstellbarer Spannung gehalten werden.

Vor dem durch die Walzen 5, 6 gebildeten Eintrittsspalt befindet sich der Tragschlitten 11, der hier mit Elektromagneten 12 ausgestattet ist, deren Anker 13 gegen die Wirkung einer Feder 14 die Passerstifte 15 aus der Auflageebene des Kopier- und Belichtungsgutes PB herauszuziehen vermag. Der Tragschlitten 11 kann in Richtung des Pfeils I auf das Treibwalzenpaar 5, 6 zu und wieder zurückbewegt werden. In Richtung des Pfeils I, hinter dem den Austrittsspalt bildenden Treibwalzenpaar 5a, 6a ist eine anheb- und absenkbare Stützleiste 16 angeordnet, die die überstehende Vorderkante des aus dem Austrittsspalt austretenden Kopiergutes unterfaßt, anhebt und in Richtung des Pfeils II dem Treibwalzenpaar 17 zuführt, das das Kopiergut in der Sammelmulde 18 ablegt. Der Ablegevorgang wird durch ein Gebläse 19, das gegebenenfalls auch ionisierte Luft auszublasen vermag, unterstützt. Ausgelöst wird der Abhebevorgang der Stützleiste 16 durch eine Kontaktblattfeder 20, die auf einer, in der Transportebene des Kopier- und Belichtungsgutes PB liegenden Gegenkontaktfläche 21 aufliegt und dabei einen elektrischen Kontakt herstellt, dessen Unterbrechung durch die Vorderkante des auf die Stützfläche auflaufenden Kopiergutes P, einen Schaltvorgang auslöst, der das Anheben der Stützleiste 16 bewirkt. Die dem auflaufenden Kopiergut zugewandte Vorderkante der Stützleiste 16 weist dabei eine in der Kantenlinie offene, (nicht dargestellte) Ausnehmung auf, innerhalb derer die Kontaktblattfeder 20 auf der Gegenkontaktfläche 21 aufliegt. Diese Anordnung stellt sicher, daß die Stützleiste 16 erst dann angehoben wird, wenn sie die Vorderkante des Kopiergutes P voll unterfaßt hat.

. Das unter dem Kopiergut P liegende Belichtungsgut B wird in der Ebene der dem Gut zugewandten Seite der lichtdurchlässigen Platte 4 aus dem durch die Treibwalzen 5a, 6a gebildeten Austrittsspalt austretend gerade aus weiter von der Transportvorrichtung TV erfaßt und von dieser in Richtung des Pfeils III der Entwicklungseinrichtung D zugeführt. Zur Sicherung des Gleichlaufs aller, das Kopier- und Belichtungsgut erfassenden Treibelemente, sind diese auf nicht dargestellte Weise über Kupplungen, Zahnriemen und Zahnräder mit einem einzigen Antriebsaggregat zwangsgekuppelt. Die horizontalen Kanten der lichtdurchlässigen Scheibe 4 sind im Bereich des Eintritts- und des Austrittsspaltes, diese erweiternd, abgeschrägt. Zwischen die lichtdurchlässige Scheibe 4 und die Belichtungseinrichtung P können Filter aus flexiblem Werkstoff eingebracht werden, die auf nicht dargestellte Weise nach Art eines Filmstreifens mit Hilfe einer Abrolleinrichtung über der lichtdurchlässigen Scheibe 4 in Filtrierstellung und aus dieser wieder herausbringbar sind. Dabei können Filter unterschiedlicher Wirkung hintereinander angeordnet den Filmstreifen bilden.

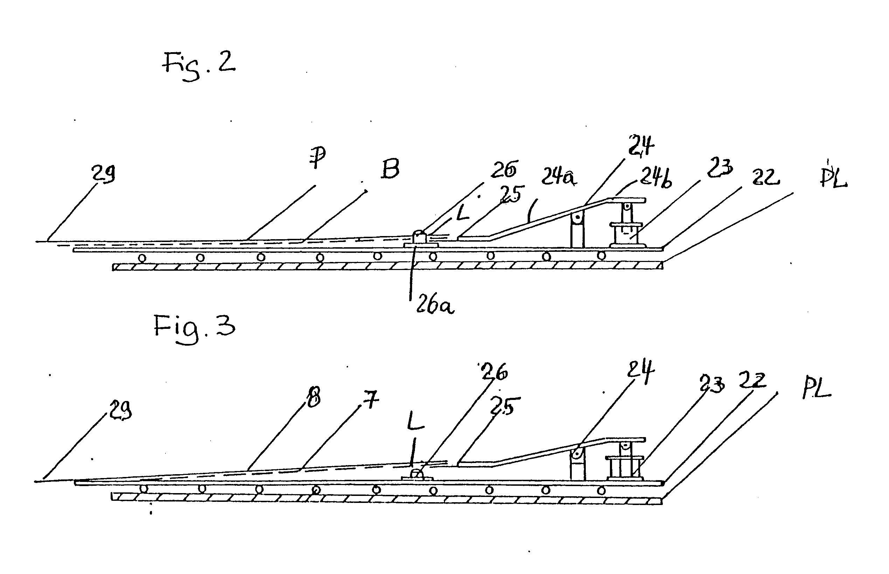

Bei der Ausbildung nach den Fig. 2 und 3 besteht der hier mit 22 bezeichnete Tragschlitten aus einer, auf einer Grundplatte PL abrollenden Platte, die gleichzeitig die Auflagefläche für die Schicht aus Kopiergut P und Belichtungsgut B bildet. Die Schicht weist Lochungen L auf, die auf die Passerstifte 26 aufgeschoben werden (Fig.2). Die Passerstifte sitzen dabei auf einer auswechselbaren Leiste 26a. Die Schicht aus Kopiergut P und Belichtungsgut B wird von einem dicht an die Reihe der Passerstifte 26 heranreichenden Hublineal 25 unterfaßt. Dieses Hublineal 25 ist an einem Arm 24a einer auf dem Tragschlitten 22 gelagerten Doppelhebelanordnung 24 angeordnet, deren anderer Arm 24b an einen Hubmotor 23 angelenkt ist. Der Tragschlitten 22 wird wie bereits beschrieben in Richtung auf den Eintrittsspalt der Belichtungseinrichtung BE verfahren und, nachdem die Treibwalzen 5, 6 zunächst die überstehende Vorderkante 29 des Kopiergutes P und anschließend auch das darunterliegende Belichtungsgut B erfaßt haben, nach Betätigung des Hubmotors 23 und Anheben der Schicht von Kopier- und Belichtungsgut PB durch das Hublineal 25 in die in Fig. 3 wiedergegebene Stellung mit Hilfe eines in der Bewegungsbahn des Tragschlittens 22 angeordneten, (nicht dargestellten) Tastschalters über eine ebenfalls nicht dargestellte Rückziehvorrichtung in die in Fig. 2 dargestellte Ausgangsstellung zurückgefahren.

**Patentansprüche**

1. Vorrichtung zum Einbringen, Aufbringen und Trennen von Kopier- und Belichtungsgutschichten in einer Einrichtung zum kontinuierlichen Belichten dieses Gutes (PB), bei der im Reibschluß mit der Rückseite einer der Schichten stehende endlose Riemenförderer (7) diese durch einen Belichtungsraum mit einer lichtdurchlässigen Scheibe (4) transportieren, deren in Bewegungsrichtung des Gutes gemessene Länge kleiner ist als deren Breite, wobei in Bewegungsrichtung vor und hinter der lichtdurchlässigen Scheibe (4) Treibwalzenpaare (5, 6; 5a, 6a) angeordnet sind, die das Gut (PB) von oben und unten beaufschlagen und Ein- und Austrittsspalte bilden, die in der Ebene der dem Gut zugewandten Seite der lichtdurchlässigen Scheibe (4) liegen, und daß das Kopie- und Belichtungsgut vor Eintritt in den Eintrittsspalt mit Passerstiften (26) in seiner Lage zueinander fixiert wird,
dadurch gekennzeichnet, daß das Kopier- und Belichtungsgut (PB) auf einem, vor dem Eintrittsspalt in Richtung auf diesen geradlinig hin- und herbewegbaren, die Passerstifte (26) tragenden Tragschlitten (11; 22) liegt und die Passerstifte (26) mittels einer Hubvorrichtung (12; 23, 25) in Lochungen (L) des Kopier- und Belichtungsgutes (PB) ein- und herausbringbar sind.

2. Vorrichtung nach Anspruch 1, dadurch gekennzeichnet, daß die quer zur Bewegungsrichtung des Kopier- und Belichtungsgutes (PB) verlaufende Vorderkante des Kopiergutes (P) über die Vorderkante des Belichtungsgutes (B) überstehend auf dem Tragschlitten (11) angeordnet ist.

3. Vorrichtung nach Anspruch 2, gekennzeichnet durch eine, in Bewegungsrichtung des Kopier- und Belichtungsgutes (PB) hinter dem Austrittsspalt angeordnete, die Unterseite (29) des überstehenden Kopiergutes (P) unterfassende, von einer Schaltvorrichtung (20, 21) gesteuerte Stützleiste (16).

4. Vorrichtung nach Anspruch 1, dadurch gekennzeichnet, daß der Tragschlitten (22) eine Auflagefläche für das Kopier- und Belichtungsgut (PB) aufweist, auf der in Reihe, quer zur Bewegungsrichtung des Tragschlittens (22) die fest mit der Auflagefläche verbundenen Passerstifte (26) und dicht vor der Reihe der Passerstife (26) ein, auf die Auflagefläche aufleg- sowie anheb- und absenkbares Hublineal (25) angeordnet sind.

5. Vorrichtung nach den Ansprüchen 1 und/oder 4, dadurch gekennzeichnet, daß der Tragschlitten (11) eine Auflagefläche für das Kopier- und Belichtungsgut (PB) aufweist, auf der in Reihe, quer zur Bewegungsrichtung des Tragschlittens (11) Passerstifte (15) angeordnet sind, die mittels, an dem Tragschlitten (11) angeordneter Hubeinrichtungen (12) absenk- und anhebbar sind.

6. Vorrichtung nach den Ansprüchen 4 oder 5, dadurch gekennzeichnet, daß die Passerstifte (15 bzw. 26) gemeinsam auf einer besonderen auswechselbaren Tragleiste (26a) angeordnet sind.

7. Vorrichtung nach den Ansprüchen 4 oder 5, gekennzeichnet durch einen in Bewegungsrichtung des Tragschlittens (11 bzw. 25) angeordneten, die Bewegung des Hublineals (25) bzw. der Passerstifte (15) steuernden Tastschalter.

8. Vorrichtung nach den Ansprüchen 4 oder 5, gekennzeichnet durch eine, den Tragschlitten (11 bzw. 22) in seine Ausgangsstellung zurückfahrende, durch Feder, Gewicht oder Motor angetriebene Rückziehvorrichtung.

9. Vorrichtung nach Anspruch 4, dadurch gekennzeichnet, daß das Hublineal (25) an dem einen Arm (24a) einer, auf dem Tragschlitten (22) gelagerten Doppelhebelanordnung (24) befestigt ist, deren anderer Arm (24b) an einen Hubmotor (23) angelenkt ist.

**Claims**

1. Apparatus for introducing, bringing up and separating of copier and exposure web material in a device for the continuous exposure of this material (PB), in which the endless belt conveyor (7) in frictional contact with the back side of one of the webs transports this through an exposure space with a transparent plate (4), the length of which measured in the direction of movement of the web is smaller than its width, wherein before and after the transparent plate (4) in the movement direction, driving roll pairs (5, 6; 5a, 6a) are arranged which contact the web (PB) from above and from below and form entry and exit nips which lie in the plane of the side of the transparent plate (4) facing the web, and that the copier and exposure web, before entry into the entry nip are fixed with register pins (26) in their position to one another,
characterised in that the copier and exposure web material (PB) lies on platens (11, 22) which carry the register pins (26) and are movable back and forth in a straight line before the entry nip and in the direction of the entry nip, and the register pins (26) can be brought in and out of holes (L) in the copier and exposure web material (PB) by means of a lifting device (12; 23, 25).

2. Apparatus according to Claim 1,
characterised in that
the front edge of the copier material (B), extending transverse to the direction of movement of the copier and exposure web material (PB) is arranged projecting over the front edge of the exposure material (B) on the platen (11).

3. Apparatus according to Claim 2,
characterised by
a support slat (16) arranged behind the exit nip in the movement direction of the copier and exposure material (PB), cooperating with the under side (29) of the projecting copier material (P) and controlled by a switching device (20, 21).

4. Apparatus according to Claim 1,
characterised in that
the platens (22) have a support surface for the copier and exposure material on which are arranged in turn, transverse to the movement direction of the platens (22) the register pins (26) fast with the support surface and, immediately before the row of register pins, a lifting straight edge (25) which is supported on the support surface and is raisable and lowerable.

5. Apparatus according to the Claims 1 and/or 4,
characterised in that
the platen (11) has a support surface for the copier and exposure material (PB) on which register pins (15) are arranged, in rows, transverse to the movement direction of the platen (11), which pins are raisable and lowerable by means of lifting devices (12) arranged on the platen (11).

6. Apparatus according to the Claims 4 or 5,
characterised in that
the register pins (15 or 26 respectively) are arranged in common on a specially exchangeable support strip (26a).

7. Apparatus according to the Claims 4 or 5,
characterised by
a sensing switch arranged in the movement direction of the platen (11 or 25 respectively) controlling the movement of the lifting straight edge (25) or the register pins (15) respectively.

8. Apparatus according to the Claims 4 or 5,
characterised by
a retraction device, driven by spring, weight or motor, for driving the platen (11 or 22) back into its starting position.

9. Apparatus according to Claim 4,
characterised in that
the lifting straight edge (25) is fixed to one arm (24a) of a double lever arrangement (24) journalled on the platen (22), the other arm (24b) of which is articulated to a lifting motor (23).

**Revendications**

1. Appareil pour l'introduction, l'application et la séparation de feuilles de reproduction et d'exposition dans un dispositif pour l'exposition continue de cet article (PB), dans lequel un transporteur à courroie sans fin (7), se trouvant en contact par friction avec le côté arrière d'une des couches, les transporte à travers une enceinte d'exposition comportant une plaque (4) transparente à la lumière (4) dont la longueur mesurée dans la direction du déplacement de l'article est plus petite que la largeur, tandis que dans la direction du déplacement sont agencées en avant et en arrière de la plaque transparente à la lumière (4) des paires de cylindres d'entrainement (5, 6; 5a, 6a) qui pressent l'article (PB) par le haut et par le bas et forment des fentes d'entrée et de sortie qui se situent dans le plan du côté de la plaque transparente à la lumière (4) tourné vers l'article, et en sorte que l'article de reproduction et d'exposition, avant l'entrée dans la fente d'entrée soit maintenu dans sa position à l'aide de broches de repérage (26), caractérisé en ce que l'article de reproduction et d'exposition (PB) se trouve sur un chariot transporteur (11; 22) déplaçable rectilignement par un mouvement de va-et-vient en avant de la fente d'entrée en direction sur celle-ci et portant des broches de repérage (26), et en ce que les broches de repérage (26) peuvent être introduites et retirées à l'aide d'un dispositif à course (12; 23, 25) dans et hors des perforations (L) de l'article de reproduction et d'exposition (PB).

2. Appareil selon la revendication 1, caractérisé en ce que l'arête avant de l'article de reproduction (P), transversale à la direction de déplacement de l'article de reproduction et d'exposition (PB), est agencée en porte-à-faux au-dessus de l'arête avant de l'article d'exposition (B) sur le chariot transporteur (11).

3. Appareil selon la revendication 2, caractérisé par une languette d'appui (16) montée dans la direction de déplacement de l'article de reproduction et d'exposition (PB) à l'arrière de la fente de sortie, supportant le côté inférieur (29) de l'article de reproduction (P) qui le surmonte et asservie à un dispositif de commutation. (20, 21)

4. Appareil selon la revendication 1, caractérisé en ce que le chariot transporteur (22) présente une surface d'assise pour l'article de reproduction et d'exposition (PB) sur laquelle sont placées en ordre successif, transversalement à la direction de déplacement du chariot transporteur (22), les broches de repérage (26) reliées fixement à la surface d'appui et, tout près de la rangée des broches de repérage (26), une règle à course (25) capable de s'appliquer sur la surface d'appui de même que de s'élever et de s'abaisser.

5. Appareil selon les revendications 1 et/ou 4, caractérisé en ce que le chariot transporteur (11) présente une surface d'assise pour l'article de reproduction et d'exposition (PB) sur laquelle en série, transversalement à la direction de déplacement du chariot transporteur (11), sont montées des broches de repérage (15) qui sont abaissables et élevables au moyen de dispositifs à course (12) montés sur le chariot transporteur (11).

6. Appareil selon la revendication 4 ou 5, caractérisé en ce que les broches de repérage (15 ou 26) sont montées ensemble sur une languette porteuse (26a) distincte échangeable.

7. Appareil selon la revendication 4 ou 5, caractérisé par un commutateur-palpeur monté dans la direction de déplacement du chariot transporteur (11 ou 25) et asservissant la réglette à course (25) ou les broches de repérage (15).

8. Appareil selon la revendication 4 ou 5, caractérisé par un dispositif de rappel ramenant le chariot transporteur (11 ou 22) à sa position de départ et actionné par un ressort, un poids ou un moteur.

9. Appareil selon la revendication 4, caractérisé en ce que la règle à course (25) est attachée à un bras (24a) d'un montage à double levier monté sur le chariot transporteur (22), dont l'autre bras (24b) est articulé à un moteur à course (23).

Fig. 1

**Fig. 2**

**Fig. 3**